# EUROPEAN PATENT APPLICATION

(11) **EP 4 628 514 A1**
(43) Date of publication of application: **08.10.2025**
(21) Application number: 24832297.6
(22) Date of filing: 04.06.2024
(51) Int. Cl.: C08F 220/34, C08F 220/14, C08L 33/14, A01N 25/10, C08F 220/06, C08L 33/06

(54) **ANTIBACTERIAL RESIN AND MOLDED BODY COMPRISING SAME**

(30) Priority: 26.06.2023 KR 20230082165; 03.06.2024 KR 20240072520
(71) Applicant: LG CHEM, LTD., Seoul 07336 (KR)
(72) Inventor: KANG, Soonhee, Daejeon 34122 (KR); SEO, Ue Ryung, Daejeon 34122 (KR); LEE, Ji Seok, Daejeon 34122 (KR); CHOI, Hyungsam, Daejeon 34122 (KR)
(74) Representative: Plasseraud IP
(86) International application number: PCT/KR2024/007611
(87) International publication number: WO 2025/005516

(57) **Abstract**

The present specification relates to an antibacterial resin including a copolymer including: a first unit derived from a monomer represented by Chemical Formula 1; and a second unit derived from an alkylacrylate or an alkylmethacrylate, and a molded article including the same.

## Description

### [Technical Field]

This application claims priority to and the benefit of Korean Patent Application Nos. 10-2023-0082165 and 10-2024-0072520 filed in the Korean Intellectual Property Office on June 26, 2023 and June 3, 2024, respectively, the entire contents of which are incorporated herein by reference.

The present specification relates to an antibacterial resin and a molded article including the same.

### [Background Art]

Recently, with the diversification of lifestyles, improvement of living standards, and change and improvement of consciousness, interest in improving hygiene and comfort in an individual's living environment is increasing. Accordingly, studies have been conducted on microorganisms that threaten them, but many types of microorganisms are present in the daily living environment, and are widely distributed in nature, causing serious problems.

In particular, microorganisms such as bacteria, and molds may inhabit various environments, such as dietary life, residential environments, clothing, and industrial products, but in this case, since bacteria may cause various inflammations or food poisoning and molds may produce not only odors, but also cause various skin diseases, respiratory diseases, allergies, and the like, microorganisms are problematic. In addition, microorganisms living on the surface of electronic products and household goods may cause deterioration in product performance.

Accordingly, in order to prevent human damage caused by these microorganisms, various antibacterial substances have been developed to inhibit the growth of microorganisms or to kill microorganisms.

In this case, the degree of antibacterial properties required and the material requirements for imparting antibacterial properties differ depending on the material of the product requiring antibacterial properties and the state of final use.

Antibacterial substances previously developed may be broadly divided into inorganic antibacterial agents and organic antibacterial agents. The inorganic antibacterial agents are antibacterial agents containing a metal such as silver or copper, and have an advantage of maintaining the antibacterial properties even under high temperature conditions due to excellent thermal stability, but there are problems in that the inorganic antibacterial agents are expensive and there is a possibility of discoloration due to the metal ions contained after processing. The organic antibacterial agents have advantages in that they are cheaper than inorganic antibacterial agents and exhibit excellent antibacterial effects even in a small amount, but, the organic antibacterial agents have a problem in that antibacterial durability is poor because there is a possibility of elution after being applied to products.

As described above, in introducing antibacterial agents and the like, which inhibit bacterial proliferation into resins, it has not been easy to select and introduce an antibacterial component that is harmless to the human body, satisfies economic feasibility, and does not degrade the basic physical properties of a polymer resin, while exhibiting excellent bacterial proliferation inhibiting properties.

As one example, general purpose polystyrene (GPPS) is widely used because it is transparent and has good strength. To add antibacterial activity to GPPS, an inorganic antibacterial agent (Cu, Ag, and the like) is added, but depending on the method of addition, sustainability deteriorates and problems occur due to the toxicity of the materials used.

Accordingly, there is a need for developing a highly antibacterial material that is suitable for application to each of various products, and does not release antibacterial materials, and thus is harmless to the human body.

### [Detailed Description of the Invention]

### [Technical Problem]

The present specification provides an antibacterial resin and a molded article including the same.

### [Technical Solution]

An exemplary embodiment of the present specification provides an antibacterial resin including a copolymer including: a first unit derived from a monomer represented by the following Chemical Formula 1; and a second unit derived from an alkylacrylate or an alkylmethacrylate.

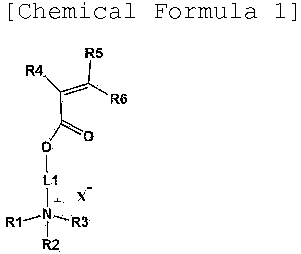

In Chemical Formula 1,
L1 is a substituted or unsubstituted alkylene group having 1 to 10 carbon atoms,
two of R1 to R3 are the same as or different from each other, and are each independently a substituted or unsubstituted alkyl group having 1 to 4 carbon atoms, and the other one is a substituted or unsubstituted alkyl group having 5 to 20 carbon atoms,
R4 to R6 are the same as or different from each other, and are each independently hydrogen or a methyl group, and
X⁻ is trifluoromethanesulfonate, methanesulfonate, tetrafluoroborate, methylsulfate, maleate, tartrate, vanillate, syringate, hexafluorophosphate, thiocyanate, or trifluoroacetate.

Another exemplary embodiment of the present specification provides a molded article including the above-described antibacterial resin or prepared therefrom.

### [Advantageous Effects]

The antibacterial resin according to some exemplary embodiments of the present specification has excellent antibacterial properties.

The antibacterial resin according to some exemplary embodiments of the present specification can exhibit antibacterial properties within a short period of time.

Since the antibacterial resin according to some exemplary embodiments of the present specification has little change in antibacterial activity depending on the amount of antibacterial material used, antibacterial properties can be exhibited within an expected range even when the unevenness of concentration occurs unintentionally during application to a product. Therefore, antibacterial properties are controlled within a specific range, so that excellent antibacterial properties can be safely imparted.

The antibacterial resin according to some exemplary embodiments of the present specification has low toxicity, and thus can solve safety problems.

The antibacterial resin according to some exemplary embodiments of the present specification can solve safety problems due to the release of antibacterial materials.

The antibacterial resin according to some exemplary embodiments of the present specification are characterized in that antibacterial activity can be maintained even after high-temperature processing due to excellent heat resistance.

### [Brief Description of Drawings]

FIG. 1 is a view illustrating the results of NMR measurement of Monomer 1-1' prepared in Preparation Example 1.
FIG. 2 is a view illustrating the results of TGA measurement for Antibacterial Resins 1, 2 and A prepared in Preparation Examples 1 and 2 and Comparative Preparation Example 1, respectively.
FIG. 3(a) is a view illustrating the appearance of Antibacterial Resins 1 and A prepared in Preparation Example 1 and Comparative Preparation Example 1, respectively, after being heat-treated at 180°C.
FIG. 3(b) is a view illustrating the appearance of Antibacterial Resins 1 and A prepared in Preparation Example 1 and Comparative Preparation Example 1, respectively, after being heat-treated at 220°C.

### [Best Mode]

Hereinafter, the present specification will be described in detail.

An exemplary embodiment of the present specification provides an antibacterial resin including a copolymer including: a first unit derived from a monomer represented by the following Chemical Formula 1; and a second unit derived from an alkylacrylate or an alkylmethacrylate.

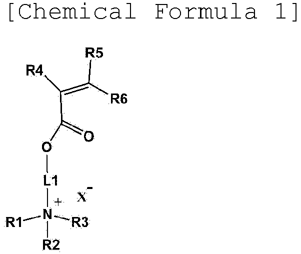

In Chemical Formula 1,
L1 is a substituted or unsubstituted alkylene group having 1 to 10 carbon atoms,
two of R1 to R3 are the same as or different from each other, and are each independently a substituted or unsubstituted alkyl group having 1 to 4 carbon atoms, and the other one is a substituted or unsubstituted alkyl group having 5 to 20 carbon atoms,
R4 to R6 are the same as or different from each other, and are each independently hydrogen or a methyl group, and
X⁻ is trifluoromethanesulfonate, methanesulfonate, tetrafluoroborate, methylsulfate, maleate, tartrate, vanillate, syringate, hexafluorophosphate, thiocyanate, or trifluoroacetate.

There are many different types of bacteria among which more than 5,000 species have been identified. Specifically, bacteria may be divided into aerobic bacteria, facultative bacteria, and anaerobic bacteria depending on the degree to which they require oxygen, and their shapes are also divided into spherical, rod-shaped, spiral shapes, and the like. Therefore, it is not easy for a single type of antibacterial agent to have the physical and/or chemical mechanisms capable of damaging or modifying the cell membranes and/or cell walls of various bacteria.

In the related art, in order to impart antibacterial activity to materials, antibacterial agents were simply mixed with polymers, and in this case, inorganic antibacterial agents or organic antibacterial agents were used. The inorganic antibacterial agents are expensive, easily induce discoloration of materials, and may degrade the physical properties of polymers during processing processes such as extrusion or injection. In addition, inorganic antibacterial agents have a disadvantage of having a low immediate antibacterial effect.

The organic antibacterial agents themselves have a disadvantage in that antibacterial persistence deteriorates due to poor stability against the human body, poor thermal stability, and the like. Furthermore, when a polymerizable organic antibacterial agent is applied to the polymerization of a polymer, there are problems in that the polymerization efficiency or conversion rate is reduced, or the inherent advantages of the polymer are often impaired.

In contrast, since the antibacterial resin according to the present invention does not include an inorganic antibacterial agent, disadvantages such as discoloration and reduction in transparency can be overcome. Further, the antibacterial resin of the present invention has the advantages of being highly stable in the human body and maintaining antibacterial durability because an antibacterial substance is not included as a separate substance in an antibacterial resin itself, but is polymerized as a monomer and included as a repeating unit that forms the main chain in the polymer, and thus there is no risk in that the antibacterial substance is eluted. That is, the antibacterial resin of the present invention exhibits the effects of having excellent antibacterial properties and long-lasting antibacterial properties.

Meanwhile, in the process of application, typical polymers often undergo a molding process at high temperatures, such as injection or extrusion, and most of the publicly-known antibacterial polymers have a problem in that their antibacterial properties are reduced or lost in the process. In contrast, the antibacterial resin of the present invention may maintain its antibacterial properties even after undergoing the aforementioned high-temperature molding process by applying a specific anion.

When one part "includes" one constituent element in the present specification, unless otherwise specifically described, this does not mean that another constituent element is excluded, but means that another constituent element may be further included.

In the present specification, the "monomer" means a unit compound that may be converted into a polymer compound by a polymerization reaction, and structures derived therefrom may become a repeating unit in a polymer or copolymer. Specifically, this means that in a state in which the corresponding compound is polymerized and bonded in the polymer, in the structure of the compound, all or a portion of two or more substituents are omitted, and a radical for being bonded to other units of the polymer is located at the position. In this case, the corresponding compound may be included in a state of being polymerized in any order and bonded in the polymer.

In the present specification, the term "derived" means that a new bond is generated while a bond between at least two adjacent elements in a compound is broken, or hydrogen or a substituent is detached, and a unit derived from the compound may mean a unit which forms one or more of a main chain and a side chain in a polymer. The unit may be included in a main chain in a polymer to constitute the polymer.

In the present specification, the "weight average molecular weight" is one of the average molecular weights in which the molecular weight is not uniform and the molecular weight of any polymer material is used as a reference, and is a value obtained by averaging the molecular weight of a component molecular species of a polymer compound having a molecular weight distribution by a weight fraction.

In the present specification, the terms "first" and "second" are used to describe various components, and the above terms are used only for the purpose of distinguishing one component from the other components.

In the present specification, the singular forms also include the plural forms unless the phrases do not express the opposite meaning explicitly.

In the present specification, among physical properties, physical properties which are affected by temperature are physical properties measured at room temperature, unless otherwise specified.

In the present specification, "room temperature" means the natural temperature at which a system has not been heated or cooled, for example, any one temperature within a range of about 10°C to 30°C, for example, a temperature of about 15°C, about 18°C, about 20°C, about 23°C, or about 25°C. Further, in the present specification, the unit of temperature is °C, unless otherwise specified.

In the present specification, when pressure among physical properties affects the results, the corresponding physical property is a physical property measured at normal pressure, unless otherwise specified.

In the present specification, "normal pressure" is the natural pressure under which a system has not been pressurized or depressurized, and refers to a pressure which is typically about 1 atmosphere (about 700 to 800 mmHg).

In the present specification, when humidity among physical properties affects the results, the corresponding physical property is a physical property measured at a humidity that is not particularly controlled in the room temperature and normal pressure state, unless otherwise specified.

In the present specification, "alkyl group" may be linear or branched, and the number of carbon atoms thereof is not particularly limited, but is preferably 1 to 60. In an exemplary embodiment of the present specification, the number of carbon atoms of the alkyl group is 1 to 30. Specific examples of the alkyl group include a methyl group, an ethyl group, a propyl group, an isopropyl group, a butyl group, an isobutyl group, a tert-butyl group, a pentyl group, a hexyl group, a heptyl group, an octyl group, a nonyl group, a decyl group, an undecyl group, a dodecyl group, a tridecyl group, and the like, but are not limited thereto.

In the present specification, "alkylene group" means a group having two bonding positions in an alkyl group, that is, a divalent group. The above-described description on the alkyl group may be applied to the alkylene group, except for a divalent alkylene group.

In the present specification, "*" means an attachment point in the copolymer. In this case, the attachment point may be a point where the same units are attached to each other, and may also be a point where a unit is attached to another unit. As an example, in the following Chemical Formula 1-A, * means both a part to which the first units are attached and a part to which the first unit and the second unit are attached.

In an exemplary embodiment of the present specification, the first unit is represented by the following Chemical Formula 1-A.

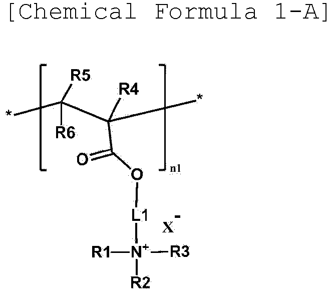

In Chemical Formula 1-A,
L1 is a substituted or unsubstituted alkylene group having 1 to 10 carbon atoms,
two of R1 to R3 are the same as or different from each other, and are each independently a substituted or unsubstituted alkyl group having 1 to 4 carbon atoms, and the other one is a substituted or unsubstituted alkyl group having 5 to 20 carbon atoms,
R4 to R6 are the same as or different from each other, and are each independently hydrogen or a methyl group, and
X⁻ is trifluoromethanesulfonate, methanesulfonate, tetrafluoroborate, methylsulfate, maleate, tartrate, vanillate, syringate, hexafluorophosphate, thiocyanate, or trifluoroacetate, n1 is an integer from 1 to 10,000, and
* is an attachment point in the copolymer.

In an exemplary embodiment of the present specification, a quaternary ammonium cation included in the first unit has a linker (L1) linked to the main chain and three end groups (R1 to R3).

In an exemplary embodiment of the present specification, L1 is an alkylene group having 1 to 10 carbon atoms.

In an exemplary embodiment of the present specification, L1 is a straight-chained alkylene group having 1 to 10 carbon atoms.

In an exemplary embodiment of the present specification, L1 is an alkylene group having 1 to 4 carbon atoms.

In an exemplary embodiment of the present specification, L1 is a methylene group; an ethylene group; or a propylene group.

In an exemplary embodiment of the present specification, L1 is an ethylene group.

In an exemplary embodiment of the present specification, two of R1 to R3 are the same as or different from each other, and are each independently an alkyl group having 1 to 4 carbon atoms, and the other one is an alkyl group having 5 to 20 carbon atoms.

In an exemplary embodiment of the present specification, any one of R1 to R3 is a straight-chained alkyl group having 5 to 20 carbon atoms. In this case, when R1 to R3 are all an alkyl group having less than 5 carbon atoms, there is a problem in that antibacterial properties are not exhibited, and when any one of R1 to R3 is an alkyl group having more than 20 carbon atoms, there is a problem in that a starting material for preparing a copolymer is not dissolved in a solvent, making synthesis impossible.

In an exemplary embodiment of the present specification, two of R1 to R3 are the same as or different from each other, and are each independently a methyl group or an ethyl group, and the other one is an alkyl group having 5 to 20 carbon atoms.

In an exemplary embodiment of the present specification, among R1 to R3, the other two which are not an alkyl group having 5 to 20 carbon atoms are the same as each other.

In an exemplary embodiment of the present specification, two of R1 to R3 are each a methyl group, and the other one is an alkyl group having 5 to 20 carbon atoms.

In an exemplary embodiment of the present specification, R2 and R3 are the same as or different from each other, and are each independently an alkyl group having 1 to 4 carbon atoms, and R1 is an alkyl group having 5 to 20 carbon atoms.

In an exemplary embodiment of the present specification, R2 and R3 are each a methyl group, and R1 is an alkyl group having 5 to 20 carbon atoms.

In an exemplary embodiment of the present specification, R4 to R6 are the same as or different from each other, and are each independently hydrogen or a methyl group.

In an exemplary embodiment of the present specification, R5 and R6 are each hydrogen.

In an exemplary embodiment of the present specification, R4 is hydrogen or a methyl group.

In an exemplary embodiment of the present specification, Chemical Formula 1 is the following Chemical Formula 1-1 or 1-2.

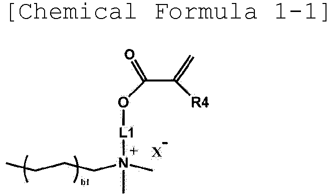

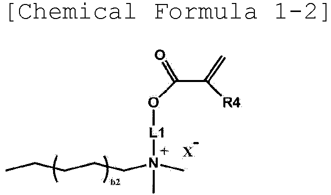

In Chemical Formulae 1-1 and 1-2,
L1 is a substituted or unsubstituted alkylene group having 1 to 10 carbon atoms,
R4 is hydrogen or a methyl group,
b1 is an integer from 2 to 9,
b2 is an integer from 1 to 8, and
X⁻ is trifluoromethanesulfonate, methanesulfonate, tetrafluoroborate, methylsulfate, maleate, tartrate, vanillate, syringate, hexafluorophosphate, thiocyanate, or trifluoroacetate.

In an exemplary embodiment of the present specification, the first unit is the following Chemical Formula 1-A-1 or 1-A-2.

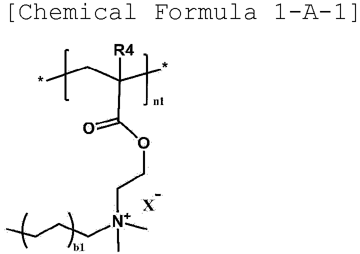

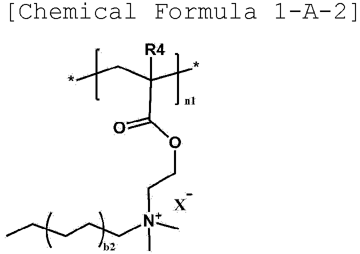

In Chemical Formulae 1-A-1 and 1-A-2,
R4 is hydrogen or a methyl group,
b1 is an integer from 2 to 9,
b2 is an integer from 1 to 8,
X⁻ is trifluoromethanesulfonate, methanesulfonate, tetrafluoroborate, methylsulfate, maleate, tartrate, vanillate, syringate, hexafluorophosphate, thiocyanate, or trifluoroacetate,
n1 is an integer from 1 to 10,000, and
* is an attachment point in the copolymer.

In an exemplary embodiment of the present specification, the trifluoromethanesulfonate is represented by CF₃SO₃⁻ or

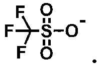

In an exemplary embodiment of the present specification, the methanesulfonate is represented by CH₃SO₃⁻ or

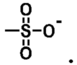

In an exemplary embodiment of the present specification, the tetrafluoroborate is represented by BF₄⁻or

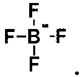

In an exemplary embodiment of the present specification, the methylsulfate is represented by CH₃OSO₃⁻or

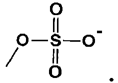

In an exemplary embodiment of the present specification, the maleate is represented by

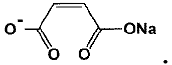

In an exemplary embodiment of the present specification, the tartrate is represented by

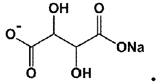

In an exemplary embodiment of the present specification, the vanillate is represented by

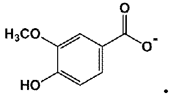

In an exemplary embodiment of the present specification, the syringate is represented by

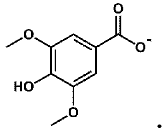

In an exemplary embodiment of the present specification, the hexafluorophosphate is represented by PF₆⁻ or

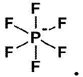

In an exemplary embodiment of the present specification, the thiocyanate is represented by SCN⁻ or

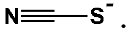

In an exemplary embodiment of the present specification, the trifluoroacetate is represented by CF₃COO⁻ or

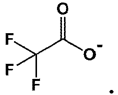

In an exemplary embodiment of the present specification, Chemical Formula 1 is any one of the following structures.

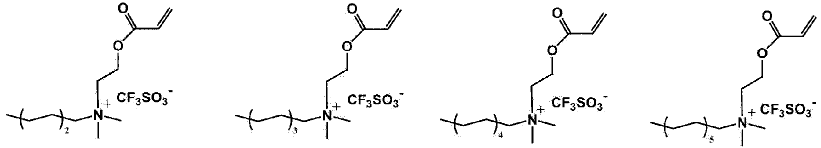

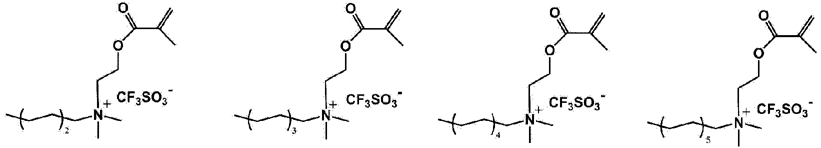

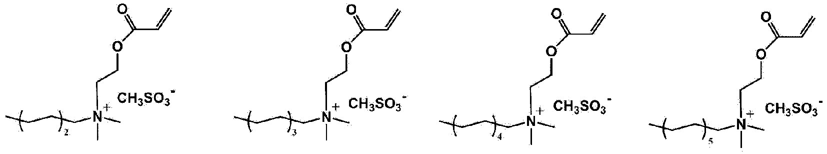

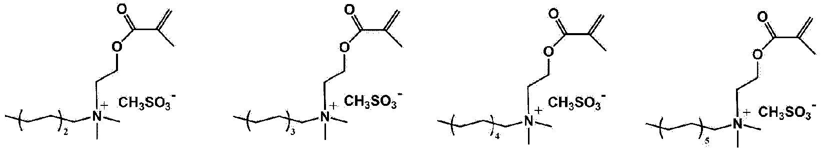

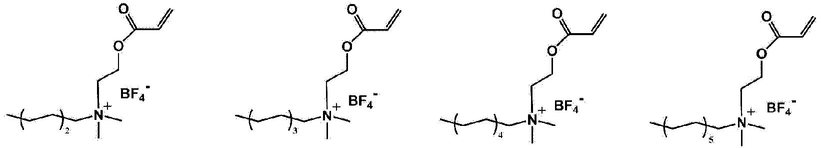

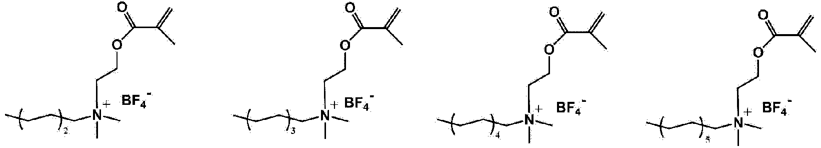

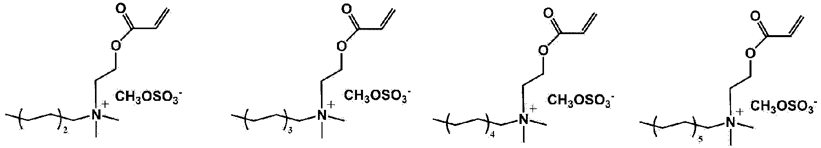

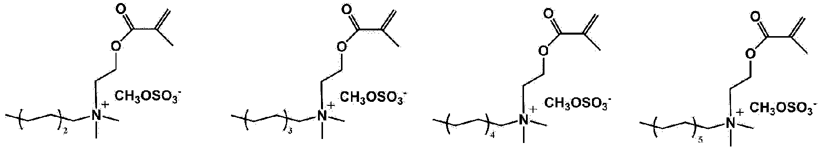

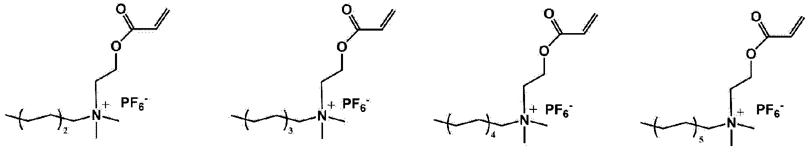

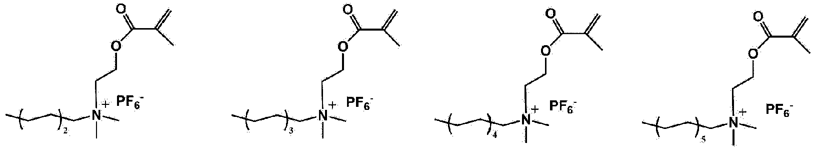

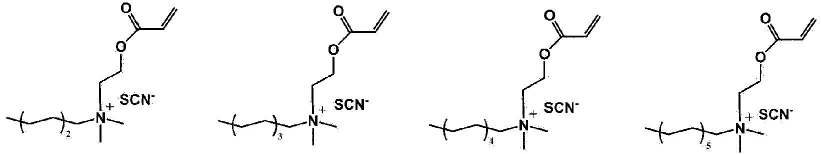

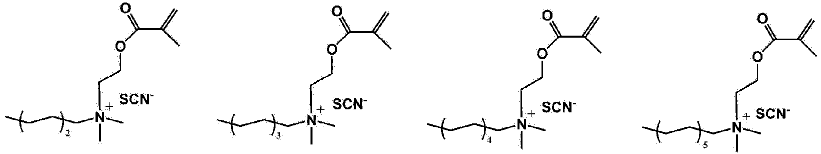

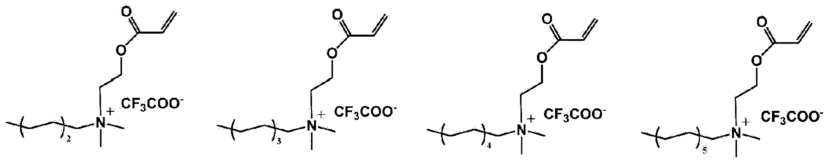

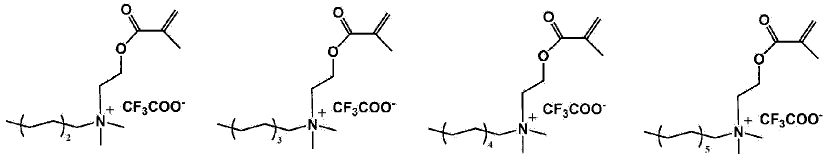

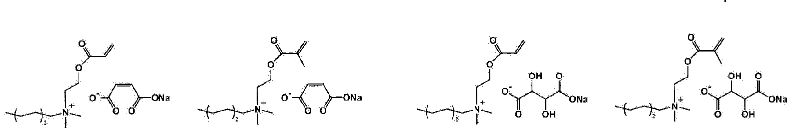

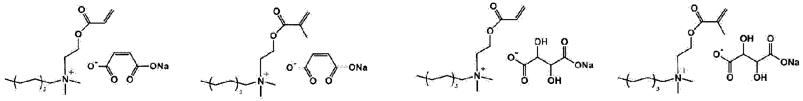

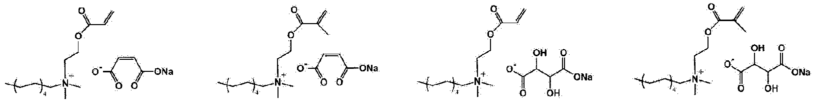

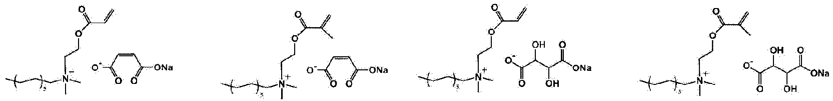

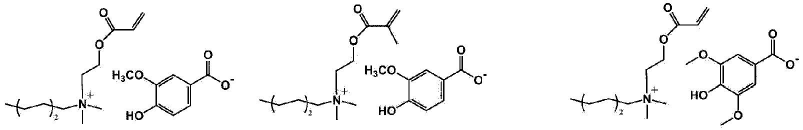

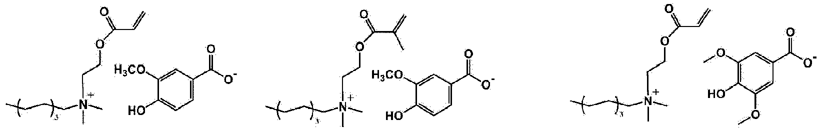

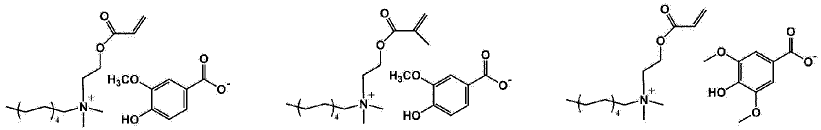

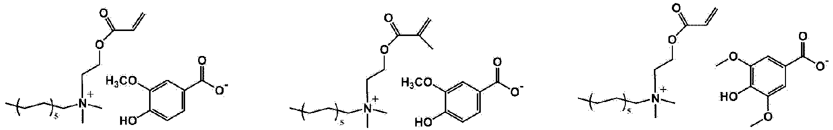

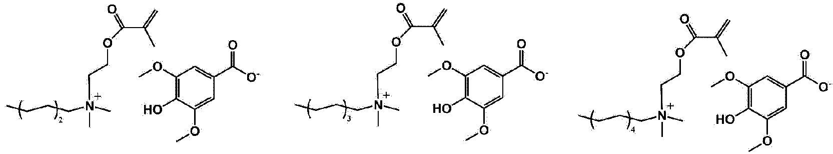

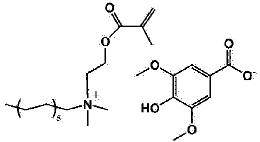

In an exemplary embodiment of the present specification, n1 is an integer from 3 to 10,000. Specifically, n is an integer from 10 to 8,000, an integer from 20 to 5,000, an integer from 20 to 1,000, or an integer from 20 to 500.

In an exemplary embodiment of the present specification, the first unit is an antibacterial substance. That is, the copolymer exhibits antibacterial properties by including the first unit. Specifically, the copolymer exhibits antibacterial properties against bacteria (at least one of Gram-positive bacteria, Gram-negative bacteria, and *Escherichia coli*) by including the first unit. More specifically, the cell walls of bacteria and the like are generally negatively charged in many cases. The cation of a quaternary ammonium having an alkyl group with a specific carbon number in the first unit electrostatically adsorbs to the cell wall of bacteria, and then the cell surface structure of bacteria may be coated and/or destroyed by interaction with the alkyl group (R1 to R3) of the quaternary ammonium salt exhibiting hydrophobicity to exhibit antibacterial properties.

In an exemplary embodiment of the present specification, the second unit derived from the alkylacrylate or alkylmethacrylate may have a structure in which the double bond of the acrylate group forms a repeating unit while being broken.

In an exemplary embodiment of the present specification, the alkylacrylate or alkylmethacrylate may be methyl acrylate, ethyl acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, lauryl acrylate, ceryl acrylate, stearyl acrylate, lauryl methacrylate, cetyl methacrylate, or stearyl methacrylate. Preferably, the alkylacrylate or alkylmethacrylate may be methyl methacrylate.

In an exemplary embodiment of the present specification, the second unit is represented by the following Chemical Formula 2.

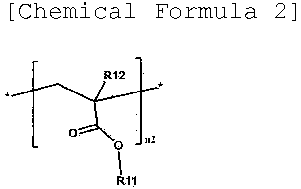

In Chemical Formula 2,
R11 is an alkyl group,
R12 is hydrogen or a methyl group,
n2 is an integer from 1 to 10,000, and
* is an attachment point in the copolymer.

In an exemplary embodiment of the present specification, n2 is an integer from 3 to 10,000. Specifically, n2 is an integer from 10 to 8,000, an integer from 20 to 5,000, an integer from 20 to 1,000, or an integer from 20 to 500.

In an exemplary embodiment of the present specification, the copolymer exhibits a glass transition temperature (Tg) by including the second unit. Accordingly, the processability in a processing process such as extrusion and injection is improved. Further, the miscibility with other polymers such as polyethylene and polypropylene is improved.

In an exemplary embodiment of the present specification, a copolymer is a random copolymer, an alternating copolymer, or a block copolymer. Specifically, the copolymer is a random copolymer.

In an exemplary embodiment of the present specification, the first unit and the second unit are included in the main chain of the copolymer.

In an exemplary embodiment of the present specification, the first unit is included in the main chain of the copolymer, and the second unit is included in the side chain of the copolymer.

In an exemplary embodiment of the present specification, the first unit is included in the side chain of the copolymer, and the second unit is included in the main chain of the copolymer.

In an exemplary embodiment of the present specification, the copolymer includes a third unit represented by the following Chemical Formula 3.

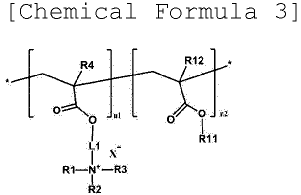

In Chemical Formula 3,
L1 is a substituted or unsubstituted alkylene group having 1 to 10 carbon atoms,
two of R1 to R3 are the same as or different from each other, and are each independently a substituted or unsubstituted alkyl group having 1 to 4 carbon atoms, and the other one is a substituted or unsubstituted alkyl group having 5 to 20 carbon atoms,
R11 is an alkyl group,
R4 and R12 are the same as or different from each other, and are each independently hydrogen or a methyl group,
X⁻ is trifluoromethanesulfonate, methanesulfonate, tetrafluoroborate, methylsulfate, maleate, tartrate, vanillate, syringate, hexafluorophosphate, thiocyanate, or trifluoroacetate,
n1 and n2 are each an integer from 1 to 10,000, and
* is an attachment point in the copolymer.

In an exemplary embodiment of the present specification, a copolymer including: a first unit derived from the monomer represented by Chemical Formula 1; and a second unit derived from an alkylacrylate or an alkylmethacrylate is represented by Chemical Formula 3.

In an exemplary embodiment of the present specification, R11 is an alkyl group having 1 to 10 carbon atoms.

In an exemplary embodiment of the present specification, R11 is a straight-chained alkyl group having 1 to 10 carbon atoms.

In an exemplary embodiment of the present specification, R11 is a methyl group; an ethyl group; or a propyl group.

In an exemplary embodiment of the present specification, the copolymer has a weight average molecular weight (Mw) of 10,000 g/mol to 1,000,000 g/mol. When the copolymer has a weight average molecular weight of less than 10,000 g/mol, some molecules may be present in the form of a monomer or an oligomer rather than a polymer, and thus may be easily eluted, and furthermore, a problem in that the copolymer is absorbed into the human body due to its low molecular weight may occur. In addition, when the copolymer has a weight average molecular weight of more than 1,000,000 g/mol, there may be a problem in processability.

More specifically, the copolymer may have a weight average molecular weight (Mw; g/mol) of 10,000 or more, 15,000 or more, 20,000 or more, 23,000 or more, or 25,000 or more and 1,000,000 or less, 500,000 or less, 300,000 or less, 100,000 or less, 50,000 or less, 40,000 or less, or 35,000 or less.

According to an exemplary embodiment of the present specification, the antibacterial resin has a number average molecular weight (Mn) of 10,000 g/mol to 800,000 g/mol. More preferably, the antibacterial resin may have a number average molecular weight (Mn; g/mol) of 15,000 or more, 20,000 or more, 25,000 or more, 30,000 or more, 35,000 or more, or 40,000 or more and 150,000 or less, 100,000 or less, 90,000 or less, or 80,000 or less.

In an exemplary embodiment of the present specification, the weight average molecular weight (Mw) of the copolymer may be measured by gel permeation chromatography (GPC) using polymethyl methacrylate (PMMA) as a calibration standard sample. More specifically, 200 mg of the copolymer is diluted in 200 mL of an N,N-dimethylformamide (DMF) solvent to prepare a sample of about 1000 ppm, and then the weight average molecular weight may be determined using an Agilent 1200 series GPC instrument at a flow rate of 1 mL/min through an RI detector. In this case, after a calibration curve is prepared using eight PMMA standards, the molecular weight of the sample may be calculated based on the calibration curve.

According to an exemplary embodiment of the present specification, the molecular weight distribution (Mw/Mn) of the copolymer may be in a range of 1 to 3. The molecular weight distribution may be 1.1 or more, 1.2 or more, 1.3 or more, or 1.4 or more, or 2.8 or less, 2.6 or less, 2.4 or less, 2.2 or less, 2.0 or less, 1.8 or less, or 1.6 or less in other examples.

In an exemplary embodiment of the present specification, the copolymer is an antibacterial copolymer that exhibits antibacterial activity.

In an exemplary embodiment of the present specification, the weight average molecular weight, number average molecular weight and molecular weight distribution of the antibacterial resin may be the same as those of the copolymer.

In an exemplary embodiment of the present specification, the molar ratio of the first unit and the second unit in the copolymer is 10:90 to 80:20.

In an exemplary embodiment of the present specification, the first unit is present in an amount of 10 mol% to 80 mol% with respect to the total mole number of the first unit and the second unit in the copolymer. When the content of the first unit is less than 10 mol%, it is difficult to exhibit sufficient antibacterial effect, and when the content of the first unit is more than 80 mol %, there is a problem in that it is difficult to apply the copolymer to real life because the processability deteriorates.

More specifically, the first unit is included in an amount of 10 mass% or more, 15 mass% or more, 20 mass% or more, 25 mass% or more, or 30 mass% or more, and 75 mass% or less, 70 mass% or less, 60 mass% or less, or 50 mass% or less, with respect to the total mass of the first unit and the second unit in the copolymer.

In an exemplary embodiment of the present specification, the antibacterial resin exhibits antibacterial properties against at least one of Gram-positive bacteria, Gram-negative bacteria, and molds.

As used herein, the term Gram-positive bacteria is a general term for bacteria that are stained purple when stained using the Gram staining method, and Gram-positive bacteria exhibit a purple color without discoloration even though the Gram-positive bacteria are stained with a basic dye such as crystal violet and then treated with ethanol because the cell walls of Gram-positive bacteria are composed of several layers of peptidoglycan.

In an exemplary embodiment of the present specification, the Gram-positive bacteria are selected from *Enterococcus faecalis, Staphylococcus aureus, Streptococcus pneumoniae, Enterococcus faecium* and *Lactobacillus lactis.* Specifically, the Gram-positive bacteria are any one selected from the above-described examples, but are not limited thereto.

As used herein, the term Gram-negative bacteria are a general term for bacteria that are stained red when stained with the Gram staining method, and Gram-negative bacteria have an outer membrane composed of lipid polysaccharides, lipid proteins, and/or other complex polymeric materials instead of having a cell wall with a relatively small amount of peptidoglycan compared to Gram-positive bacteria.

In an exemplary embodiment of the present specification, the Gram-negative bacteria are selected from *Proteus mirabilis, Escherichia coli, Salmonella typhi, Pseudomonas aeruginosa* and *Vibrio cholerae.* Specifically, the Gram-negative bacteria are any one selected from the above-described examples, but are not limited thereto.

In an exemplary embodiment of the present specification, the mold may be *Candida albicans,* but is not limited thereto.

The antibacterial properties of the copolymer against bacteria may be evaluated in accordance with JIS Z 2801 (measurement of antibacterial activity on plastics and non-porous surfaces) or ASTM E2149 (Determining the Antimicrobial Activity of Immobilized Antimicrobial Agents Under Dynamic Contact Conditions).

Specifically, the antibacterial properties may be measured by ASTM E2149 as follows.

After 1 g of an antibacterial resin is put into a 250 mL Erlenmeyer flask, 50 mL of phosphate buffered saline (PBS) inoculated with 2 x 10⁵ CFU/mL of *E. coli* ATCC 25922 strain is injected into the Erlenmeyer flask, and the strain is cultured in a shaking incubator maintained at 35°C for 1 hour. The culture solution is diluted 10-fold and 100-fold, and spread on agar medium plates. The spread agar medium plate is allowed to stand for incubation at 37°C for 24 to 48 hours. The antibacterial activity is derived by calculation using Mathematical Formula 1 based on the CFU count of the diluted samples. Antibacterial activity (%) = (1 - ASample/AReference)× 100
A_{Sample} = Concentration of microorganisms in medium cultured by adding antibacterial resin
A_{Reference} = Concentration of microorganisms in medium cultured without adding antibacterial resin

In the present specification, exhibiting antibacterial properties means that the antibacterial activity measured based on the method, in other words, the bacteriostatic reduction rate is 99% or more.

Specifically, the bacteriostatic reduction rate of bacteria of the antibacterial resin as measured by ASTM E2149 may be 99.1% or more, 99.5% or more, or 99.9% or more and 100% or less.

In an exemplary embodiment of the present specification, the antibacterial resin has an antibacterial activity of 99% or more against Gram-positive bacteria as measured by ASTM E2149.

In an exemplary embodiment of the present specification, the antibacterial resin has an antibacterial activity of 99% or more against Gram-negative bacteria as measured by ASTM E2149.

In an exemplary embodiment of the present specification, the antibacterial resin has an antibacterial activity of 99% or more against molds as measured by ASTM E2149.

In the present specification, the "colony forming unit (CFU)" means a colony forming unit, and CFU/mL means the CFU count per 1mL.

In an exemplary embodiment of the present specification, a CFU value measured by Method 1 is introduced as the A value (microbial concentration) in Mathematical Formula 1.

Since the bacterial strains of the Gram-positive bacteria, Gram-negative bacteria and molds may not only induce various diseases upon contact, but also cause secondary infections, it is preferred to exhibit antibacterial properties against all of the Gram-positive bacteria, Gram-negative bacteria, and molds using one compound.

In an exemplary embodiment of the present specification, the antibacterial resin has a primary thermal decomposition temperature of 200°C or higher.

In an exemplary embodiment of the present specification, the antibacterial resin exhibits heat resistance. In the present specification, exhibiting heat resistance means that the primary thermal decomposition temperature is 200°C or higher.

In the present specification, the thermal decomposition temperature may be measured using a thermogravimetric analyzer (TGA).

Specifically, the thermal decomposition temperature may be confirmed by measuring the TGA under the following temperature conditions set for each section in a nitrogen atmosphere environment.
Step 1) Temperature increase from 30°C to 110°C at a rate of 10°C/min
Step 2) Maintain at 110°C for 10 minutes
Step 3) Cool from 110°C to 50°C at a rate of 10°C/min
Step 4) Temperature increase from 50°C to 600°C at a rate of 10°C/min

In the sections, the first temperature decrease section of the four-stage mass decrease curve was determined as the primary thermal decomposition temperature. Specifically, the thermal decomposition temperature was defined as an extrapolated intersection point between the initial mass reference line and the tangent line of the maximum slope point in the first mass loss section of a mass loss curve as measured by TGA.

In an exemplary embodiment of the present specification, the upper limit of the primary thermal decomposition temperature is not particularly limited, and may be, for example, 500°C or less, 480°C or less, or 450°C or less.

According to an exemplary embodiment of the present specification, the antibacterial resin has a glass transition temperature of 80°C or higher.

In the present specification, the glass transition temperature may be measured using differential scanning calorimetry (DSC).

Specifically, the glass transition temperature may be confirmed by measuring the DSC under the following temperature conditions set for each section.
Step 1) Temperature increase from 30°C to 200°C at a rate of 10°C/min
Step 2) Maintain at 200°C for 5 minutes
Step 3) Cool from 200°C to -50°C at a rate of - 10°C/min
Step 4) Maintain at -50°C for 5 minutes
Step 5) Temperature increase from -50°C to 200°C at a rate of 10°C/min

In an exemplary embodiment of the present specification, the upper limit of the glass transition temperature is not particularly limited, and may be, for example, 150°C or less, 140°C or less, or 130°C or less.

The antibacterial resin has the above-described thermal decomposition temperature and glass transition temperature, and thus exhibits the effect of improving processability in processes such as extrusion and injection.

In an exemplary embodiment of the present specification, the antibacterial resin may be prepared by copolymerizing the monomer represented by Chemical Formula 1 (hereinafter, a first monomer) and an alkylacrylate or an alkylmethacrylate (hereinafter, a second monomer).

In an exemplary embodiment of the present specification, the antibacterial resin may be polymerized in the presence of a polymerization initiator. Such a polymerization initiator may be appropriately selected depending on the polymerization method, a thermal polymerization initiator may be used when a thermal polymerization method is used, a photopolymerization initiator may be used when a photopolymerization method is used, and both a thermal polymerization initiator and a photopolymerization initiator may be used when a hybrid polymerization method (a method using both heat and light) is used. However, even by the photopolymerization method, a certain amount of heat is generated by light irradiation such as ultraviolet irradiation, and in addition, since a certain amount of heat is generated by the progress of the polymerization reaction, which is an exothermic reaction, a thermal polymerization initiator may be additionally used.

In an exemplary embodiment of the present specification, the photopolymerization initiator can be used without limitation in the configuration thereof as long as it is a compound capable of forming radicals by light such as ultraviolet rays. For example, as the photopolymerization initiator, it is possible to use one or more selected from the group consisting of benzoin ether, dialkyl acetophenone, hydroxyl alkylketone, phenyl glyoxylate, benzyl dimethyl ketal, acyl phosphine and α-aminoketone. Meanwhile, specific examples of acyl phosphine include diphenyl(2,4,6-trimethylbenzoyl)phosphine oxide, phenylbis(2,4,6-trimethylbenzoyl)phosphine oxide, ethyl(2,4,6-trimethylbenzoyl)phenyl phosphinate, and the like. A wider variety of photoinitiators are well clarified in p. 115 of "UV Coatings: Basics, Recent Developments and New Application (Elsevier, 2007)", written by Reinhold Schwalm, and the photoinitiator is not limited to the above-described examples.

In an exemplary embodiment of the present specification, the photopolymerization initiator may be included in an amount of 0.001 parts by weight to 1 part by weight with respect to 100 parts by weight of the total of the first monomer and the second monomer. When the content of the photopolymerization initiator is less than 0.001 parts by weight, the polymerization rate may be slow, and when the content of the photopolymerization initiator exceeds 1 part by weight, the molecular weight of the polymer may be small, and physical properties may become non-uniform. More specifically, the photopolymerization initiator may be included in an amount of 0.005 parts by weight or more, or 0.01 parts by weight or more, or 0.1 parts by weight or more, and 0.5 parts by weight or less, or 0.3 parts by weight or less with respect to 100 parts by weight of the total of the monomers.

In an exemplary embodiment of the present specification, it is possible to use one or more selected from the group consisting of a persulfate-based initiator, an azo-based initiator, hydrogen peroxide and ascorbic acid as the thermal polymerization initiator. Specifically, examples of the persulfate-based initiator include sodium persulfate (Na₂S₂O₈), potassium persulfate (K₂S₂O₈), ammonium persulfate ((NH₄)₂S₂O₈) and the like, and examples of the azo-based initiator include azobisisobutyronitrile, 2,2-azobis(2-amidinopropane) dihydrochloride, 2,2-azobis-(N, N-dimethylene)isobutyramidine dihydrochloride, 2-(carbamoylazo)isobutylonitrile, 2,2-azobis[2-(2-imidazolin-2-yl)propane]dihydrochloride, 4,4-azobis-(4-cyanovaleric acid), and the like. A wider variety of thermal polymerization initiators are well clarified in p. 203 of 'Principle of Polymerization(Wiley, 1981)', written by Odian, and the thermal polymerization initiator is not limited to the above-described examples.

In an exemplary embodiment of the present specification, the thermal polymerization initiator may be included in an amount of 0.001 parts by weight to 3 parts by weight with respect to 100 parts by weight of the total of the first monomer and the second monomer. When the content of the thermal polymerization initiator is less than 0.001 parts by weight, additional thermal polymerization hardly occurs, so the effect of adding the thermal polymerization initiator is negligible, and when the content of the thermal polymerization initiator exceeds 3 parts by weight, the molecular weight of the polymer may be small, and physical properties may become non-uniform. More specifically, the thermal polymerization initiator may be included in an amount of 0.005 parts by weight or more, or 0.01 parts by weight or more, or 0.1 parts by weight or more, and 3 parts by weight or less, 2.5 parts by weight, or 2.3 parts by weight or less with respect to 100 parts by weight of the total of the monomers.

According to an exemplary embodiment of the present specification, the end group of the copolymer may have a structure derived from the first unit, the second unit, and the initiator used when preparing the copolymer. Specifically, the end group may have one bonding site at the first unit and the second unit, or may have a structure corresponding to half of the initiator used.

For example, the end group of the copolymer has any one of the following structures.

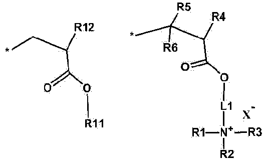

In above structures, L1, R1 to R6, R11, R12 and X⁻coincide with those defined in Chemical Formulae 1 and 2, and * is a moiety attached to the copolymer.

The first monomer, the second monomer and the polymerization initiator may be prepared in the form of a solution dissolved in a solvent.

In an exemplary embodiment of the present specification, the solvent can be used without limitation in the composition thereof as long as it can dissolve the above-described components, and for example, it is possible to use a combination of one or more selected among water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethyl ether, toluene, xylene, butyrolactone, carbitol, methyl cellosolve acetate, N, N-dimethylacetamide, and the like.

In an exemplary embodiment of the present specification, the copolymerization of the first monomer and the second monomer may be carried out by any typically known method without any particular configuration limitation. For example, the copolymerization may be carried out at a temperature of 60°C to 100°C, or 60°C to 90°C for 1 hour to 24 hours, and when the reaction is completed, the polymer prepared may be extracted and dried to obtain a finally desired copolymer.

An exemplary embodiment of the present specification provides a molded article including the above-described antibacterial resin or prepared therefrom.

In the present specification, the molded article means a product including a material including the antibacterial resin, a material made from the antibacterial resin, or the antibacterial resin.

Specifically, the molded article is one or more selected from freshness-preserving materials, fabric products, agricultural films, automotive parts, various office supplies, various packaging materials, and medical supplies.

More specifically, the molded article may be a packaging material such as a food packaging material, a vegetable packaging material, a grain packaging material, a fruit packaging material, a meat packaging material, a seafood packaging material, and a processed food packaging material, and a freshness-preserving material such as a container for vegetables, grains, fruits, meat, seafood, processed foods, and the like; a fabric product such as a food tray mat, a table mat, a tablecloth, a carpet, and a seat cover; an agricultural film; an automotive part such as an interior and exterior material; an office supply such as tape, adhesive tape, masking tape, and a masking film; various packaging materials such as a flower packaging material, a plastic bag, an easy-open packaging bag, a shopping bag, a standing bag, a transparent packaging box, an automatic packaging film, an electronic component packaging material, and a machine component packaging material; and medical supplies such as a medical film, a medical tape, and a cell culture pack.

Furthermore, the molded article may be a blow molding molded article, an inflation molded article, a cast molded article, an extrusion laminate molded article, an extrusion molded article, a foam molded article, an injection molded article, a sheet, a film, a fiber, a monofilament, or a non-woven fabric, but is not limited to the examples.

### [Mode for Invention]

Hereinafter, the present specification will be described in detail with reference to Experimental Examples for specifically describing the present specification. However, the Experimental Examples according to the present specification may be modified in various forms, and it is not interpreted that the scope of the present specification is limited to the Experimental Examples described below. The Experimental Examples of the present specification are provided to more completely describe the present specification to a person with ordinary skill in the art.

### Preparation Example 1. Preparation of Antibacterial Resin 1

### (1) Preparation of Monomer 1

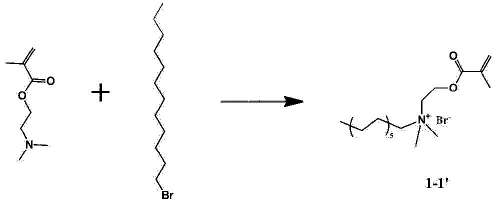

70 mL of acetonitrile, 2 mol of 2-(dimethylamino)ethyl methacrylate, 2 mol of 1-bromododecane, and 0.32 g of p-methoxyphenol were introduced into a 2-L round bottom flask. The mixture was stirred at 45°C for 16 hours using a magnetic bar to perform a reaction to prepare a quaternary ammonium salt by substituting an amino group with an alkyl group. Thereafter, extraction was performed by pouring the completely reacted solution into 10 L of methyl tert-butyl ether (MTBE). Thereafter, the reaction product was filtered using a vacuum filter to completely remove the remaining MTBE, thereby preparing Antibacterial Monomer 1-1'.

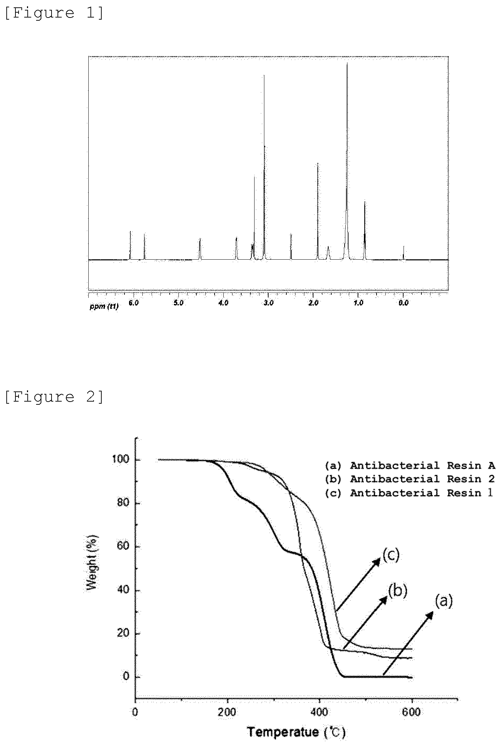

FIG. 1 is a view illustrating NMR measurement results of Monomer 1-1'.

### (2) Preparation of Antibacterial Resin 1

188 mL of ethanol, 50 g of methyl methacrylate (0.5 M), 60.9 g of Monomer 1-1', and 2 mol% of azobisisobutyronitrile were introduced into a 500-mL round bottom flask. The mixture was stirred at 65°C for 16 hours using a stirring rod to perform a polymerization reaction. The completely reacted solution was mixed and diluted with 50 mL of acetonitrile at room temperature, and the resulting mixture was added to 2 L of a sodium tetrafluoroborate aqueous solution having a concentration of 50 wt% to cause precipitation. Thereafter, the solid polymer was filtered using a vacuum filter, and the remaining solvent was completely removed by vacuum drying to prepare Antibacterial Resin 1.

### Preparation Example 2.

Antibacterial Resin 2 was prepared in the same manner as in Preparation Example 1, except that a sodium trifluoromethanesulfonate aqueous solution was used instead of a sodium tetrafluoroborate aqueous solution during precipitation in (2) of Preparation Example 1.

### Preparation Example 3.

Antibacterial Resin 3 was prepared in the same manner as in Preparation Example 1, except that a sodium methanesulfonate aqueous solution was used instead of a sodium tetrafluoroborate aqueous solution during precipitation in (2) of Preparation Example 1.

### Preparation Example 4.

Antibacterial Resin 4 was prepared in the same manner as in Preparation Example 1, except that a sodium methylsulfate aqueous solution was used instead of a sodium tetrafluoroborate aqueous solution during precipitation in (2) of Preparation Example 1.

### Preparation Example 5.

Antibacterial Resin 5 was prepared in the same manner as in Preparation Example 1, except that a sodium maleate aqueous solution was used instead of a sodium tetrafluoroborate aqueous solution during precipitation in (2) of Preparation Example 1.

### Preparation Example 6.

Antibacterial Resin 6 was prepared in the same manner as in Preparation Example 1, except that a sodium tartrate aqueous solution was used instead of a sodium tetrafluoroborate aqueous solution during precipitation in (2) of Preparation Example 1.

### Preparation Example 7.

Antibacterial Resin 7 was prepared in the same manner as in Preparation Example 1, except that a sodium vanillate aqueous solution was used instead of a sodium tetrafluoroborate aqueous solution during precipitation in (2) of Preparation Example 1.

### Preparation Example 8.

Antibacterial Resin 8 was prepared in the same manner as in Preparation Example 1, except that a sodium syringate aqueous solution was used instead of a sodium tetrafluoroborate aqueous solution during precipitation in (2) of Preparation Example 1.

### Preparation Example 9.

Antibacterial Resin 9 was prepared in the same manner as in Preparation Example 1, except that a sodium hexafluorophosphate aqueous solution was used instead of a sodium tetrafluoroborate aqueous solution during precipitation in (2) of Preparation Example 1.

### Preparation Example 10.

Antibacterial Resin 10 was prepared in the same manner as in Preparation Example 1, except that a sodium thiocyanate aqueous solution was used instead of a sodium tetrafluoroborate aqueous solution during precipitation in (2) of Preparation Example 1.

### Preparation Example 11.

Antibacterial Resin 11 was prepared in the same manner as in Preparation Example 1, except that a sodium trifluoroacetate aqueous solution was used instead of a sodium tetrafluoroborate aqueous solution during precipitation in (2) of Preparation Example 1.

### Comparative Preparation Example 1.

Antibacterial Resin A was prepared in the same manner as in Preparation Example 1, except that water was used instead of a sodium tetrafluoroborate aqueous solution during precipitation in (2) of Preparation Example 1.

### Comparative Preparation Example 2.

188 mL of ethanol, 50 g of methyl methacrylate (0.5 M), and 2 mol% of azobisisobutyronitrile were introduced into a 500-mL round bottom flask. The mixture was stirred at 65°C for 16 hours using a stirring rod to perform a polymerization reaction. The completely reacted solution was mixed and diluted with 50 mL of acetonitrile at room temperature, and the resulting mixture was added to 2 L of water to cause precipitation. Thereafter, the solid polymer was filtered using a vacuum filter, and the remaining solvent was completely removed by vacuum drying to prepare PMMA which is a homopolymer.

### Comparative Preparation Example 3.

Antibacterial Resin B was prepared in the same manner as in Preparation Example 1, except that a sodium toluenesulfonate aqueous solution was used instead of a sodium tetrafluoroborate aqueous solution during precipitation in (2) of Preparation Example 1.

### Comparative Preparation Example 4.

Antibacterial Resin C was prepared in the same manner as in Preparation Example 1, except that a sodium phosphate aqueous solution was used instead of a sodium tetrafluoroborate aqueous solution during precipitation in (2) of Preparation Example 1.

### Comparative Preparation Example 5.

Antibacterial Resin D was prepared in the same manner as in Preparation Example 1, except that a sodium acetate aqueous solution was used instead of a sodium tetrafluoroborate aqueous solution during precipitation in (2) of Preparation Example 1.

### Comparative Preparation Example 6.

Antibacterial Resin E was prepared in the same manner as in Preparation Example 1, except that a sodium phenyl acetate aqueous solution was used instead of a sodium tetrafluoroborate aqueous solution during precipitation in (2) of Preparation Example 1.

### Comparative Preparation Example 7.

Antibacterial Resin F was prepared in the same manner as in Preparation Example 1, except that a sodium salicylate aqueous solution was used instead of a sodium tetrafluoroborate aqueous solution during precipitation in (2) of Preparation Example 1.

### Comparative Preparation Example 8.

Antibacterial Resin G was prepared in the same manner as in Preparation Example 1, except that a sodium benzoate aqueous solution was used instead of a sodium tetrafluoroborate aqueous solution during precipitation in (2) of Preparation Example 1.

### Comparative Preparation Example 9.

Antibacterial Resin H was prepared in the same manner as in Preparation Example 1, except that a sodium benzyl phosphate aqueous solution was used instead of a sodium tetrafluoroborate aqueous solution during precipitation in (2) of Preparation Example 1.

The types of anions in the antibacterial resins prepared in Preparation Examples 1 to 11 and Comparative Preparation Examples 1 to 9 are shown in the following Table 1.

### <Experimental Example 1> Measurement of antibacterial activity

The antibacterial activity of each of the Antibacterial Resins 1 to 11, Antibacterial Resins A to H and PMMA prepared in Preparation Examples 1 to 11 and Comparative Preparation Examples 1 to 9 was measured in accordance with ASTM E2179. The specific measurement method is as follows.

After 1 g of an antibacterial resin was put into a 250 mL Erlenmeyer flask, 50 mL of phosphate buffered saline (PBS) inoculated with 2 x 10⁵ CFU/mL of *E. coli* ATCC 25922 strain was injected into the Erlenmeyer flask, and the strain was cultured in a shaking incubator maintained at 35°C for 1 hour. The culture solution was diluted 10-fold and 100-fold, and spread on agar medium plates. The spread agar medium plate was allowed to stand for incubation at 37°C for 24 to 48 hours. The antibacterial activity was derived by calculation using Mathematical Formula 1 based on the CFU count of the diluted samples. Antibacterial activity (%) = (1 - ASample/AReference)× 100
A_{Sample} = Concentration of microorganisms in medium cultured by adding antibacterial resin
A_{Reference} = Concentration of microorganisms in medium cultured without adding antibacterial resin

The measured antibacterial activities are shown in the following Table 1.

**[Table 1]**

| | Substance used | Type of anion | Antibacterial activity (%) |
|---|---|---|---|
| Experimental Example 1-1 | Antibacterial Resin 1 | Tetrafluoroborat e (BF₄⁻) | More than 99.9 |
| Experimental Example 1-2 | Antibacterial Resin 2 | Trifluoromethane sulfonate (CF₃SO₃⁻) | More than 99.9 |
| Experimental Example 1-3 | Antibacterial Resin 3 | Methanesulfonate (CH₃SO₃⁻) | More than 99.9 |
| Experimental Example 1-4 | Antibacterial Resin 4 | Methylsulfate (CH₃OSO₃⁻) | More than 99.9 |
| Experimental Example 1-5 | Antibacterial Resin 5 | 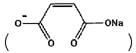 Maleate | More than 99.9 |
| Experimental Example 1-6 | Antibacterial Resin 6 | 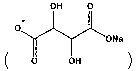 Tartrate | More than 99.9 |
| Experimental Example 1-7 | Antibacterial Resin 7 | 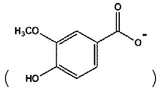 Vanillate | More than 99.9 |
| Experimental Example 1-8 | Antibacterial Resin 8 | 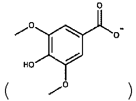 Syringate | More than 99.9 |
| Experimental Example 1-9 | Antibacterial Resin 9 | Hexafluorophosph ate (PF₆⁻) | More than 99.9 |
| Experimental Example 1-10 | Antibacterial Resin 10 | Thiocyanate (SCN⁻) | More than 99.9 |
| Experimental Example 1-11 | Antibacterial Resin 11 | Trifluoroacetate (CF₃COO⁻) | More than 99.9 |
| Comparative Example 1-1 | Antibacterial Resin A | Br⁻ | More than 99.9 |
| Comparative Example 1-2 | PMMA | - | 0 |
| Comparative Example 1-3 | Antibacterial Resin B | 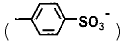 Toluenesulfonate | 98.8 |
| Comparative Example 1-4 | Antibacterial Resin C | Phosphate (Na₂PO₄⁻) | 98.5 |
| Comparative Example 1-5 | Antibacterial Resin D | Acetate (CH₃COO⁻) | More than 99.9 |
| Comparative Example 1-6 | Antibacterial Resin E | 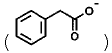 Phenyl acetate | More than 99.9 |
| Comparative Example 1-7 | Antibacterial Resin F | 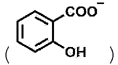 Salicylate | More than 99.9 |
| Comparative Example 1-8 | Antibacterial Resin G | 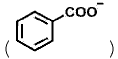 Benzoate | More than 99.9 |
| Comparative Example 1-9 | Antibacterial Resin H | 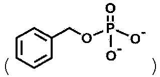 Benzyl phosphate | 87.3 |

According to Table 1 above, it can be confirmed that the antibacterial activity is 0 in the case of Comparative Example 1-2 which is a methyl methacrylate homopolymer.

In contrast, it can be confirmed that the antibacterial activity is excellent, exceeding 99.9% in the case of Experimental Examples 1-1 to 1-11 (Antibacterial Resins 1 to 11).

### <Experimental Example 2> Measurement of thermal decomposition temperature

The thermal decomposition temperature of each of the Antibacterial Resins 1, 2, 3, and 9, Antibacterial Resins A to H, and PMMA prepared in Preparation Examples 1, 2, 3, and 9 and Comparative Preparation Examples 1 to 9 was measured using a thermogravimetric analyzer (TGA, TA Instrument, DISCOVERY TGA 550 W/MFC & AUTO).

The TGA was measured in a nitrogen atmosphere environment, and the temperature conditions for each section were set as follows:
Step 1) Temperature increase from 30°C to 110°C at a rate of 10°C/min
Step 2) Maintain at 110°C for 10 minutes
Step 3) Cool from 110°C to 50°C at a rate of 10°C/min
Step 4) Temperature increase from 50°C to 600°C at a rate of 10°C/min

In the sections, the first temperature decrease section of the four-stage mass decrease curve was determined as the primary thermal decomposition temperature. Specifically, the thermal decomposition temperature was defined as an extrapolated intersection point between the initial mass reference line and the tangent line of the maximum slope point in the first mass loss section of a mass loss curve as measured by TGA.

The measured primary thermal decomposition temperatures are described in the following Table 2.

FIG. 2 illustrates the TGA measurement results of Antibacterial Resins 1, 2, and A.

### <Experimental Example 3> Measurement of glass transition temperature

The glass transition temperature of each of the Antibacterial Resins 1, 2, 3, and 9, Antibacterial Resins A to H, and PMMA prepared in Preparation Examples 1, 2, 3, and 9 and Comparative Preparation Examples 1 to 9 was measured using differential scanning calorimetry (DSC, TA Instrument, DISCOVERY TGA 550W/MFC & AUTO).

During the measurement of DSC, the temperature conditions were set as follows:
Step 1) Temperature increase from 30°C to 200°C at a rate of 10°C/min
Step 2) Maintain at 200°C for 5 minutes
Step 3) Cool from 200°C to -50°C at a rate of - 10°C/min
Step 4) Maintain at -50°C for 5 minutes
Step 5) Temperature increase from -50°C to 200°C at a rate of 10°C/min

The measured glass transition temperatures are shown in the following Table 2.

**[Table 2]**

| | Substance used | Type of anion | Primary thermal decomposition temperature (°C) | Glas transition temperature (°C) |
|---|---|---|---|---|
| Experimental Example 2-1 | Antibacterial Resin 1 | Tetrafluoroborate (BF₄⁻) | 300 | 98.7 |
| Experimental Example 2-2 | Antibacterial Resin 2 | Trifluoromethanesulfonate (CF₃SO₃⁻) | 350 | 81.7 |
| Experimental Example 2-3 | Antibacterial Resin 3 | Methanesulfonate (CH₃SO₃⁻) | 350 | 80.5 |
| Experimental Example 2-4 | Antibacterial Resin 9 | Hexafluorophosphate (PF₆⁻) | 420 | 103 |
| Comparative Example 2-1 | Antibacterial Resin A | Br⁻ | 186 | 63.2 |
| Comparative Example 2-2 | PMMA | - | 248 | 105 |
| Comparative Example 2-3 | Antibacterial Resin B | 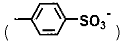 Toluenesulfonate | 350 | 85.6 |
| Comparative Example 2-4 | Antibacterial Resin C | Phosphate (Na₂PO₄⁻) | 370 | 88.2 |
| Comparative Example 2-5 | Antibacterial Resin D | Acetate (CH₃COO⁻) | 190 | 47.2 |
| Comparative Example 2-6 | Antibacterial Resin E | 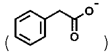 Phenyl acetate | 196 | 56.3 |
| Comparative Example 2-7 | Antibacterial Resin F | 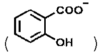 Salicylate | 195 | 45.8 |
| Comparative Example 2-8 | Antibacterial Resin G | 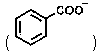 Benzoate | 190 | 53.2 |
| Comparative Example 2-9 | Antibacterial Resin H | 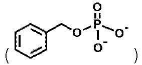 Benzyl phosphate | 380 | 101.8 |

According to Table 2 and FIG. 2, it can be confirmed that in the case of Comparative Example 2-1 (Antibacterial Resin A) including Br⁻ as an anion, the primary thermal decomposition temperature is low at less than 200°C, and the glass transition temperature is also less than 80°C. From these results, it can be predicted that when a halogen group is used as an anion, the heat resistance may deteriorate, leading to decomposition or color changes.

Further, according to Tables 1 and 2, it can be confirmed that in the case of antibacterial resins including anions different from those of the present invention, the antibacterial activity is less than 99%, or the primary thermal decomposition temperature is low at less than 200°C, and the glass transition temperature is also less than 80°C. Specifically, it can be confirmed that when the anion is toluenesulfonate, phosphate, or benzyl phosphate, the antibacterial activity is less than 99% (Comparative Examples 1-3, 1-4, and 1-9), and when the anion is acetate, benzyl acetate, salicylate, or benzoate, the primary thermal decomposition temperature is low at less than 200°C and the glass transition temperature is also less than 80°C (Comparative Examples 2-5 to 2-8). Through this, it can be confirmed that the type of anion affects antibacterial activity and heat resistance.

Meanwhile, according to Tables 1 and 2, it can be confirmed that the antibacterial resin of the present invention has an antibacterial activity of more than 99.9%, and simultaneously a primary thermal decomposition temperature of 200°C or higher, and also exhibits a glass transition temperature of 80°C or higher. From this, it can be predicted that the antibacterial resin of the present invention has excellent antibacterial activity and simultaneously excellent processability, and improved heat resistance.

### <Experimental Example 4> Visual evaluation after heat treatment

Each of Antibacterial Resin 1 and Antibacterial Resin A prepared in Preparation Examples were heat-treated at 180°C and 220°C, and the changes were confirmed with the naked eye.

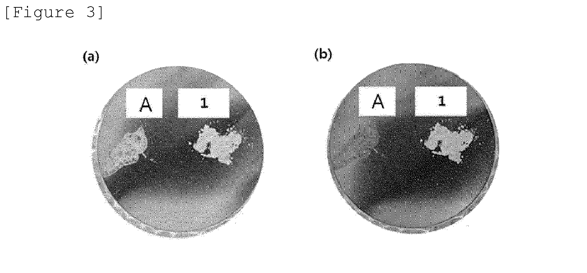

In FIG. 3, (a) is after heat treatment at 180°C, (b) is after heat treatment at 220°C, '1' means Antibacterial Resin 1, and 'A' means Antibacterial Resin A.

According to FIG. 3, it can be confirmed that in the case of Antibacterial Resin A including Br⁻ as an anion, the color changes after heat treatment at 220°C. In contrast, it can be confirmed that in the case of Antibacterial Resin 1 including BF₄⁻ as an anion, no change occurs even when heat treatment is performed at 220°C. Through this, it can be confirmed that the antibacterial resin according to an exemplary embodiment of the present invention is more thermally stable.

In summary, it can be seen through Tables 1 and 2 and FIGS. 2 and 3 that the antibacterial resin according to the present specification simultaneously exhibits heat resistance while having excellent antibacterial activity, and has excellent processability.

## Claims

1. An antibacterial resin comprising a copolymer comprising: a first unit derived from a monomer represented by the following Chemical Formula 1; and
a second unit derived from an alkylacrylate or an alkylmethacrylate: 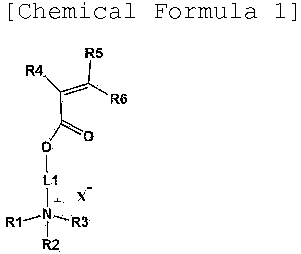 wherein, in Chemical Formula 1,
L1 is a substituted or unsubstituted alkylene group having 1 to 10 carbon atoms,
two of R1 to R3 are the same as or different from each other, and are each independently a substituted or unsubstituted alkyl group having 1 to 4 carbon atoms, and the other one is a substituted or unsubstituted alkyl group having 5 to 20 carbon atoms,
R4 to R6 are the same as or different from each other, and are each independently hydrogen or a methyl group, and
X⁻ is trifluoromethanesulfonate, methanesulfonate, tetrafluoroborate, methylsulfate, maleate, tartrate, vanillate, syringate, hexafluorophosphate, thiocyanate, or trifluoroacetate.

2. The antibacterial resin of claim 1, wherein two of R1 to R3 are the same as or different from each other, and are each independently a methyl group or an ethyl group, and the other one is an alkyl group having 5 to 20 carbon atoms.

3. The antibacterial resin of claim 1, wherein L1 is a methylene group; an ethylene group; or a propylene group.

4. The antibacterial resin of claim 1, wherein Chemical Formula 1 is the following Chemical Formula 1-1 or 1-2: 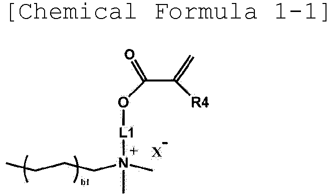 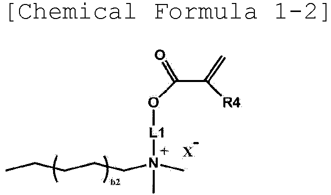 in Chemical Formulae 1-1 and 1-2,
L1 is a substituted or unsubstituted alkylene group having 1 to 10 carbon atoms,
R4 is hydrogen or a methyl group,
b1 is an integer from 2 to 9,
b2 is an integer from 1 to 8, and
X⁻ is trifluoromethanesulfonate, methanesulfonate, tetrafluoroborate, methylsulfate, maleate, tartrate, vanillate, syringate, hexafluorophosphate, thiocyanate, or trifluoroacetate.

5. The antibacterial resin of claim 1, wherein the first unit is represented by the following Chemical Formula 1-A, 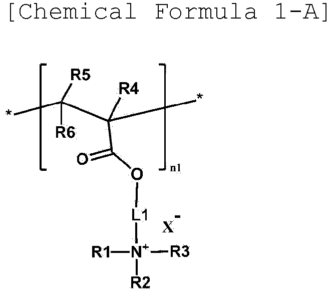 in Chemical Formula 1-A,
L1 is a substituted or unsubstituted alkylene group having 1 to 10 carbon atoms,
two of R1 to R3 are the same as or different from each other, and are each independently a substituted or unsubstituted alkyl group having 1 to 4 carbon atoms, and the other one is a substituted or unsubstituted alkyl group having 5 to 20 carbon atoms,
R4 to R6 are the same as or different from each other, and are each independently hydrogen or a methyl group,
X⁻ is trifluoromethanesulfonate, methanesulfonate, tetrafluoroborate, methylsulfate, maleate, tartrate, vanillate, syringate, hexafluorophosphate, thiocyanate, or trifluoroacetate,
n1 is an integer from 1 to 10,000, and
* is an attachment point in the copolymer.

6. The antibacterial resin of claim 1, wherein Chemical Formula 1 is any one of the following structures:

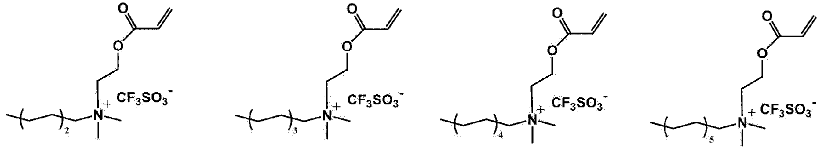

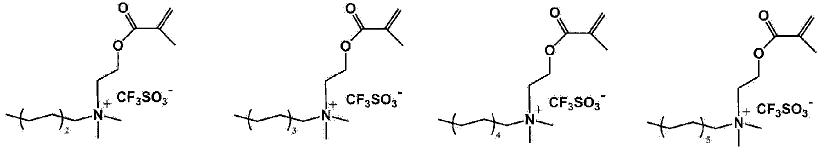

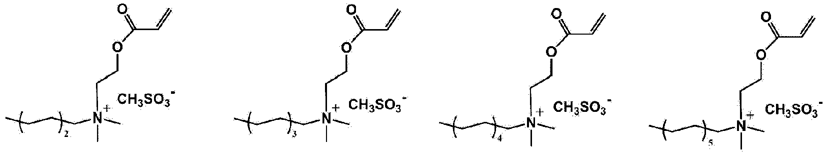

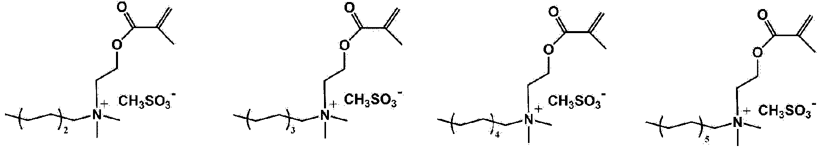

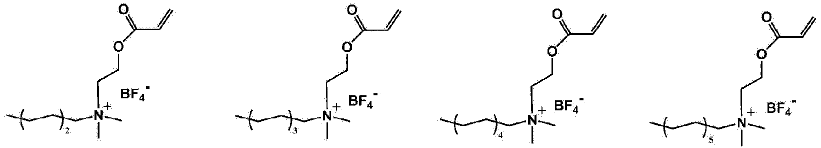

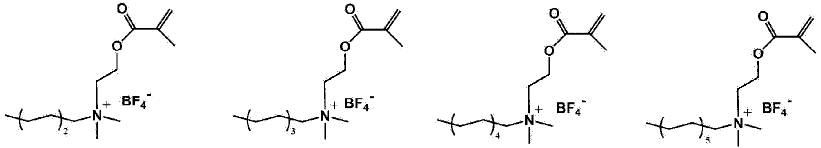

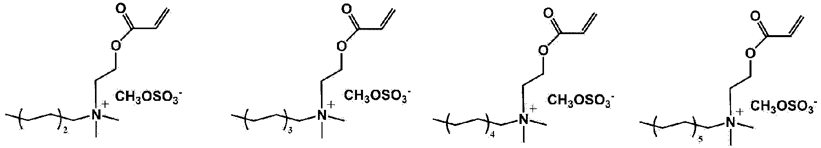

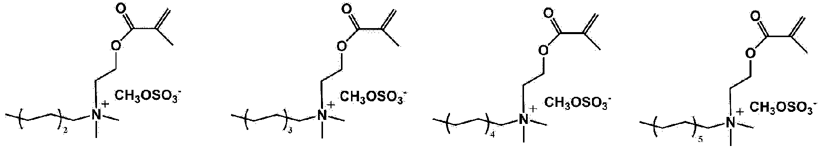

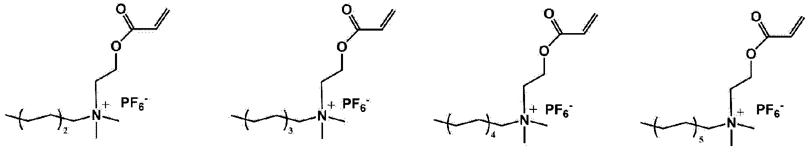

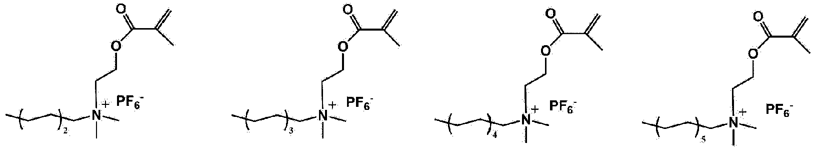

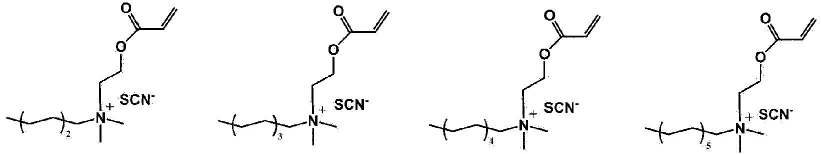

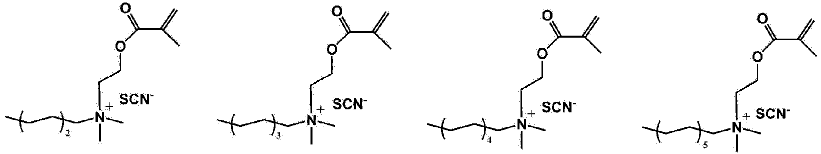

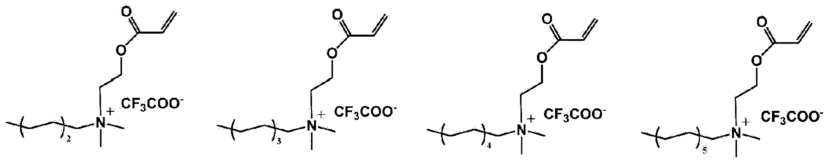

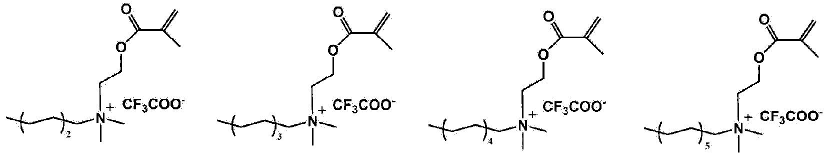

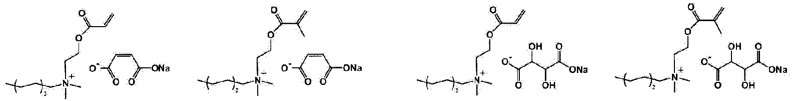

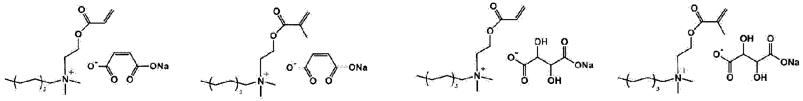

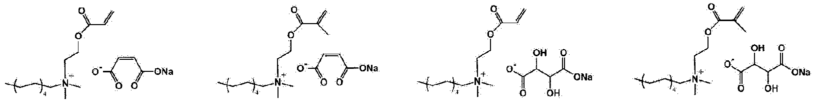

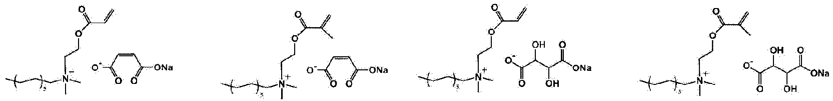

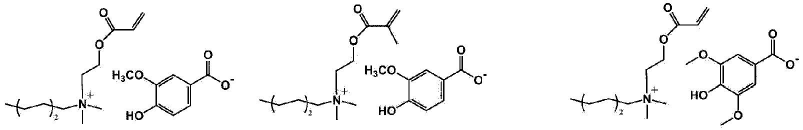

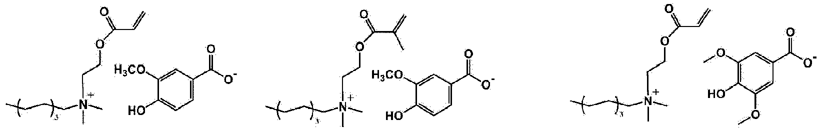

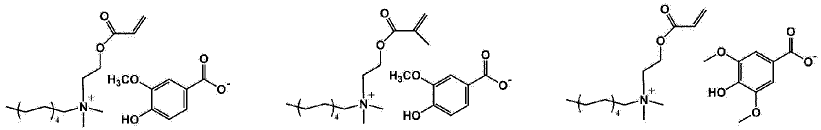

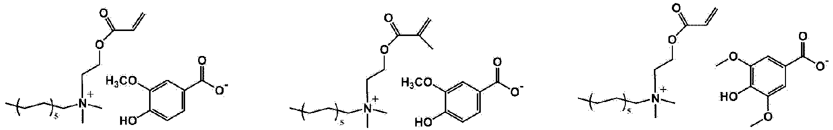

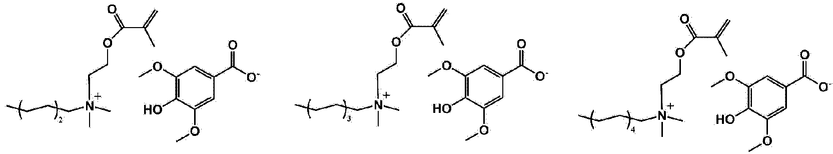

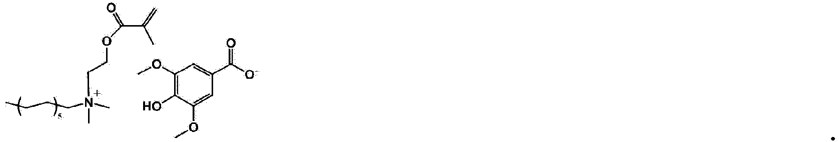

7. The antibacterial resin of claim 1, wherein the second unit is represented by the following Chemical Formula 2: 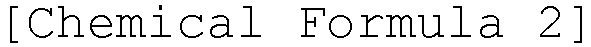 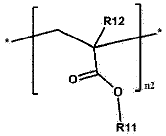 in Chemical Formula 2,
R11 is an alkyl group,
R12 is hydrogen or a methyl group,
n2 is an integer from 1 to 10,000, and
* is an attachment point in the copolymer.

8. The antibacterial resin of claim 1, wherein the copolymer comprises a third unit represented by the following Chemical Formula 3. 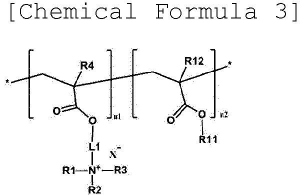 in Chemical Formula 3,
L1 is a substituted or unsubstituted alkylene group having 1 to 10 carbon atoms,
two of R1 to R3 are the same as or different from each other, and are each independently a substituted or unsubstituted alkyl group having 1 to 4 carbon atoms, and the other one is a substituted or unsubstituted alkyl group having 5 to 20 carbon atoms,
R11 is an alkyl group,
R4 and R12 are the same as or different from each other, and are each independently hydrogen or a methyl group,
X⁻ is trifluoromethanesulfonate, methanesulfonate, tetrafluoroborate, methylsulfate, maleate, tartrate, vanillate, syringate, hexafluorophosphate, thiocyanate, or trifluoroacetate,
n1 and n2 are each an integer from 1 to 10,000, and
* is an attachment point in the copolymer.

9. The antibacterial resin of claim 1, wherein a molar ratio of the first unit and the second unit in the copolymer is 10:90 to 80:20.

10. The antibacterial resin of claim 1, wherein the antibacterial resin has a primary thermal decomposition temperature of 200°C or higher.

11. The antibacterial resin of claim 1, wherein the antibacterial resin exhibits antibacterial properties against at least one of Gram-positive bacteria, Gramnegative bacteria, and molds.

12. A molded article comprising the antibacterial resin according to any one of claims 1 to 11 or prepared therefrom.
